# EUROPÄISCHE PATENTANMELDUNG

(11) **EP 0 820 797 A2**
(43) Veröffentlichungstag der Anmeldung: **28.01.1998**
(21) Anmeldenummer: 97112193.4
(22) Anmeldetag: 17.07.1997
(51) Int. Cl.: B01D 17/02, B01D 17/04, C02F 1/40, E03F 5/16

(54) **Ölabscheider**

(30) Priorität: 23.07.1996 DE 29612695 U
(71) Anmelder: Ihne, Jessika, 8570 Weinfelden (CH)
(72) Erfinder: Ihne, Heinz, 57234 Wilnsdorf (DE)
(74) Vertreter: Selting, Günther, Dipl.-Ing.

(57) **Zusammenfassung**

Der Ölabscheider weist eine Vorkammer (10) auf, aus der über einen Überlauf (12) das Flüssigkeitsgemisch in eine Abscheidekammer (13) läuft. In der Abscheidekammer (13) wird das aufschwimmende Öl durch einen Ölauslaß (14) abgezogen. Das Wasser, das noch temporäre Ölemulsion enthalten kann, fließt durch einen unteren Durchlaß (24) aus der Abscheidekammer (13) in eine Aufstiegskammer (25), aus der es durch einen Überlauf (26) abfließt. Zur Beseitigung von Ölemulsionströpfchen, die sich noch in dem Wasser befinden, ist im Strömungsweg vor dem Durchlaß (24) eine nach unten offene Kammer (20) vorgesehen, die am oberen Ende eine kleine Ölaufstiegsöffnung (21) aufweist, aus der größere Öltropfen (22) an die Oberfläche aufsteigen. Die Zusammenführung von Emulsionströpfchen wird durch abwechselndes. Verengen und Entspannen des Strömungsweges erzielt.

## Beschreibung

Die Erfindung betrifft einen Ölabscheider mit einer Abscheidekammer, die im unteren Bereich über einen Durchlaß mit einer Aufstiegskammer verbunden ist und im oberen Bereich einen Ölauslaß aufweist.

Bei Ölabscheidern erfolgt die Trennung des leichteren Öls von dem schwereren Wasser durch Dichtetrennung, wobei das auf dem Wasser aufschwimmende Öl abgeführt wird. Allerdings ist ein Teil des Öls in dem Wasser als temporäre Emulsion in Form feinster Tröpfchen enthalten. Die Größe dieser Tröpfchen reicht in der Regel nicht aus, um eine Auftriebskraft zu erzeugen, so daß sich derartiges feinverteiltes Öl nicht ohne weiteres aus dem Wasser abtrennen läßt. Bekannt sind Koaleszenzvorrichtungen, die in die Abscheidekammer eingesetzt werden und die Eigenschaft haben, daß sie Öl-Feinsttröpfchen an sich binden, bis sich zahlreiche Tröpfchen zu einem großen Tropfen vereinigt haben, der dann aufsteigen kann. Auch mit derartigen Koaleszenzvorrichtungen kann das Öl nur mit in Kauf zu nehmenden Nachteilen aus dem Wasser z.T. entfernt werden.

Der Erfindung liegt die Aufgabe zugrunde, einen Ölabscheider zu schaffen, der in hohem Maße imstande ist, eine temporäre Ölemulsion aufzulösen und das darin enthaltene Öl zum Aufsteigen zu bringen.

Die Lösung dieser Aufgabe erfolgt erfindungsgemäß mit den im Anspruch 1 angegebenen Merkmalen.

Bei dem erfindungsgemäßen Ölabscheider ist im unteren Bereich der Abscheidekammer eine Zwischenwand vorgesehen, die eine nach unten offene Kammer begrenzt. Diese Kammer hat zwei Verengungen, nämlich an ihrem Einlaß und an ihrem Auslaß. Das Wasser muß, um zur Aufstiegskammer zu gelangen, einen Strömungsweg durchlaufen, der durch mindestens zwei Verengungen führt, zwischen denen sich die erweiterte Kammer befindet. Durch dieses abwechselnde Verengen und Entspannen des Strömungsweges wird erreicht, daß die noch in dem Wasser enthaltene temporäre Emulsion in der Kammer aufsteigt. Am oberen Ende der Kammer befindet sich eine Ölaufstiegsöffnung, durch die das Öl, das sich dann zu größeren Tropfen vereinigt hat, aufsteigen kann. Die nach unten offene Kammer bildet einen Beruhigungsraum für das strömende Wasser, in dem emulgiertes Öl bevorzugt aufsteigt, um sich an der Ölaufstiegsöffnung zu größeren Tropfen zu vereinigen.

Vorzugsweise ist die Ölaufstiegsöffnung angrenzend an eine Wand der Abscheidekammer angeordnet. Hier wird der Ölaufstieg durch die Wasserströmung wenig beeinflußt, so daß das aufsteigende Öl nicht wieder verwirbelt wird.

Gemäß einer bevorzugten Ausführungsform der Erfindung ist vorgesehen, daß die Zwischenwand in dem Strömungsweg des Wassers vor der Kammer eine erste Verengung bildet, und daß zwischen der Kammer und der Aufstiegskammer eine zweite Verengung vorgesehen ist. Durch die Verengungen, in denen der Strömungsquerschnitt des Wassers verringert ist, strömt das Wasser mit höherer Geschwindigkeit, während es in der dazwischenliegenden Kammer eine langsamere Strömungsgeschwindigkeit einnimmt und beruhigt einem Druck ausgesetzt wird. Der Querschnitt der zweiten Verengung sollte größer als derjenige der ersten Verengung sein, vorzugsweise um etwa 50 %.

Versuche haben ergeben, daß es besonders vorteilhaft ist, in der Aufstiegskammer eine örtliche Verengung des Strömungsweges vorzusehen, welche die engste Stelle des Wasserdurchlasses im gesamten Ölabscheider darstellt. Überraschenderweise wirkt eine solche Verengung, obwohl sie im Abstand von der Kammer angeordnet ist, begünstigend auf die in der Kammer erfolgende Koaleszenzwirkung.

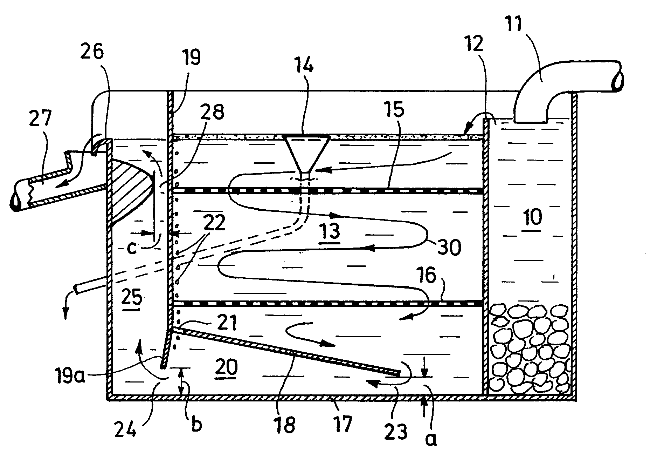

Im folgenden wird unter Bezugnahme auf die einzige Figur der Zeichnung ein Ausführungsbeispiel der Erfindung näher erläutert.

In der Zeichnung ist ein Vertikalschnitt durch einen Ölabscheider dargestellt.

Der Ölabscheider weist eine Vorkammer 10 auf, in die aus einem Einlauf 11 das Öl enthaltende Wasser von oben her eingegeben wird. Das Wasser strömt über eine Überlaufkante 12 der Vorkammer in die Abscheidekammer 13, wo das leichtere Öl auf dem schwereren Wasser aufschwimmt und durch einen Ölauslaß 14 abläuft. In dem Wasser sind jedoch kleinere Öltröpfchen, die nicht aufsteigen, als temporäre Emulsion enthalten. Um dieses emulgierte Öl zum Aufsteigen zu bringen, enthält die Abscheidekammer 13 eine Koaleszenzvorrichtung aus zwei horizontal angeordneten Gittern 15,16 aus einem Material, an dem sich Öl bevorzugt absetzt. An den Gittern 15,16 vereinigen sich die einen Öltröpfchen zu größeren Öltropfen, die aufsteigen können.

Über dem Boden 17 der Abscheidekammer 13 befindet sich eine schräge Zwischenwand 18, die von der der Vorkammer 10 entgegengesetzten Wand 19 ausgeht und sich über mindestens die Hälfte, vorzugsweise über etwa zwei Drittel, der Lange der Abscheidekammer erstreckt. Der untere Endbereich 19a der Wand 19 verläuft ebenfalls schräg nach unten, und zwar mit einer Schräge, die derjenigen der Zwischenwand 18 entgegengesetzt ist. Der Wandbereich 19a bildet zusammen mit der Zwischenwand 18 eine nach unten offene Haube. Im oberen Scheitelpunkt dieser Haube sind angrenzend an die Wand 19 Ölaufstiegsöffnungen 21 mit einer Breite von etwa 2-8 mm vorgesehen, durch die Öltropfen 22 entlang der Wand 19 aufsteigen können.

Das einlaufseitige Ende der Zwischenwand 18 bildet mit der Bodenwand 17 eine erste Verengung 23, deren Höhe a etwa 55 mm beträgt. Das Ende des Wandbereichs 19a bildet mit der Bodenwand 17 eine zweite Verengung 24, deren Höhe b etwa 75 mm beträgt. Das Wasser, das die Verengung 24 passiert hat, steigt in einer Aufstiegskammer 25 auf, welche am oberen Ende einen Überlauf 26 aufweist, welcher in ein Ablaufrohr 27 mündet. Im oberen Bereich der Aufstiegskammer 25 befindet sich eine dritte Verengung 28 mit einer Breite c von etwa 46 mm. Die Verengung 28 hat also von allen Verengungen den kleinsten Querschnitt, die Verengung 24 hat den größten Querschnitt und die Verengung 23 hat einen mittleren Querschnitt, wobei die Relationen der Querschnitte etwa 1 : 1,2 : 1,6 betragt (c : a : b).

Das in die Vorkammer 10 eintretende Flüssigkeitsgemisch läuft über den Überlauf 12 in die Abscheidekammer 13, in der das Wasser einen mäanderförmigen bzw. walzenähnlichen Strömungsweg 30 durchläuft, in dem es an den Gittern 15,16 entlang und durch diese hindurch fließt. Das Wasser, das dann noch einen Restbestand an Ölemulsion enthält, passiert die Verengung 23, die es mit erhöhter Strömungsgeschwindigkeit durchfließt, und beruhigt sich anschließend in der Kammer 20. Hierbei vereinigen sich im oberen Bereich der Kammer 20 kleinste Emulsionströpfchen zu größeren Tropfen 22, die durch die Ölaufstiegsöffnung 21 aufsteigen. Danach strömt das Wasser mit wieder erhöhter Geschwindigkeit unter dem Wandbereich 19a durch die Verengung 24 hindurch. Von besonderer Bedeutung für die Wirksamkeit hat sich die Verengung 28 erwiesen, die bewirkt, daß in der Aufstiegskammer 25 ein gewisser Staudruck erzeugt wird.

Der Ölabscheider ist für Dauerbetrieb geeignet und kann eine Zulaufmenge von etwa 8 l/sec. verarbeiten.

## Patentansprüche

1. Ölabscheider mit einer Abscheidekammer (13), die im unteren Bereich über einen Durchlaß (24) mit einer Aufstiegskammer (25) verbunden ist,
**dadurch gekennzeichnet,**
daß in der Abscheidekammer (13) im Bereich des Durchlasses (24) eine durch eine Zwischenwand (18) begrenzte, unten offene Kammer (20) vorgesehen ist, die am oberen Ende mindestens eine in das Wasser eingetauchte Ölaufstiegsöffnung (21) aufweist, aus der sich dort bildende koagulierende Öltropfen (22) an die Wasseroberfläche aufsteigen.

2. Ölabscheider nach Anspruch 1, dadurch gekennzeichnet, daß die Ölaufstiegsöffnung (21) angrenzend an eine Wand (19) der Abscheidekammer (13) angeordnet ist.

3. Ölabscheider nach Anspruch 1 oder 2, dadurch gekennzeichnet, daß die Zwischenwand (18) in dem Strömungsweg des Wassers vor der Kammer (20) eine erste Verengung (23) bildet, und daß zwischen der Kammer (20) und der Aufstiegskammer (25) eine zweite Verengung (24) vorgesehen ist, wobei die Koaleszenz der Öltröpfchen sich im Strömungsweg durch die in den Verengungen (23,24) und der Kammer (20) wechselseitig erfolgende Druckerzeugung und Entspannung ergibt.

4. Ölabscheider nach einem der Ansprüche 1-3, dadurch gekennzeichnet, daß in der Aufstiegskammer (25) eine örtliche Verengung (28) des Strömungsweges vorgesehen ist.

5. Ölabscheider nach den Ansprüche 3 und 4, dadurch gekennzeichnet, daß die Verengung (28) in der Aufstiegskammer (25) enger ist als die im Strömungsweg vorher angeordneten Verengungen (23,24).

6. Ölabscheider nach einem der Ansprüche 1-5, dadurch gekennzeichnet, daß die schräge Zwischenwand (18) sich über mehr als die Hälfte der Bodenwand (17) der Abscheidekammer (13) erstreckt.
